# EUROPEAN PATENT SPECIFICATION

(11) **EP 1 980 358 B1**
(45) Date of publication and mention of the grant of the patent: **25.11.2009**
(21) Application number: 08154338.1
(22) Date of filing: 10.04.2008
(51) Int. Cl.: B23P 21/00

(54) **Supporting frame for a production line**
Stützrahmen für eine Produktionsanlage
Cadre support pour chaîne de production

(30) Priority: 13.04.2007 IT UD20070018 U
(43) Date of publication of application: 15.10.2008
(73) Proprietor: Friul Filiere SpA, 33030 Buia (UD) (IT)
(72) Inventor: Artico, Valdi, 33011 Artegna (UD) (IT)
(74) Representative: Petraz, Gilberto Luigi

(56) References cited:
- EP-A- 1 435 275
- EP-A2- 0 517 003
- WO-A-2005/095049
- DE-A1- 19 504 457
- DE-A1- 19 729 369
- DE-A1- 19 741 671

## Description

### FIELD OF THE INVENTION

The present invention concerns a production line, such as for example an extrusion line for plastic materials, in which distinct work stations are provided, operationally aligned and disposed one after the other. In particular, the supporting frame according to the present invention substantially consists of a mono-block, mono-beam or mono-body, to facilitate the operations of installation and start-up of the production line.

### BACKGROUND OF THE INVENTION

Production lines are known, such as for example extrusion lines of plastic materials to make profiles and tubes; such production lines provide a plurality of work stations, such as for example for extrusion, drawing, shearing, storage and others, disposed in sequence one after the other.

Production lines are known which provide one or more specific supporting frames for each individual work station, which are installed, assembled and positioned, individually and in sequence in the operating site where the production line is installed.

Modular production lines are also known, for example from the German patent applications DE-A-19741671, DE-A-19729369 and DE-A-19504457, from the PCT patent application WO-A-2005/095049 and the European patent application EP-A-0517003, which consist of separate modules, each supporting a specific work station and able to be selectively coupled with an adjacent module so as to make up the production line.

One disadvantage of the solutions known in the state of the art is that the individual frames, or modules, even if assembled reciprocally with each other, do not guarantee optimum structural rigidity and alignment of the distinct work stations on the extrusion axis of the production line.

Moreover, the operations to install, assemble and position the individual frames or modules require relatively long intervention times, since, apart from providing the physical connection with the adjacent frames or modules, all the electric, hydraulic and/or mechanical cablings have to be performed individually for every frame or module, so as to guarantee the connections and the operating coordination between the different work stations.

Another disadvantage of the state of the art is that these operations have to be carried out preferably by highly specialized personnel, so as to obtain a satisfactory positioning and reciprocal operational alignment between the frames or modules and the relative work stations provided therein, so as to guarantee a good quality of the product made.

Even if performed with the greatest care, these operations can in any case entail errors both in connection and also in alignment: the errors, even though slight, determine overall a reduction in quality of the product made on the production line.

Another disadvantage of known production lines is that, if there is a need to re-organize the operating spaces, all the frames or modules of the whole production line have to be dismantled and re-assembled, with long intervention times, and therefore lack of production, and with the risk that the errors in alignment and reciprocal positioning of the frames or modules may be accentuated.

One purpose of the present invention is to achieve a supporting frame for a production line which has optimum structural rigidity, and which is simple and quick to install, both with regard to the positioning and also with regard to the operational alignment of the work stations with a single working axis.

Another purpose of the present invention is to achieve a supporting frame which is easily and quickly movable from one place to another of the operating site where the production line is installed, reducing to a minimum the intervention times and therefore the unproductiveness of the production line itself.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, a supporting frame according to the present invention is applied to a production line consisting of a plurality of distinct work stations, at least two, but advantageously three or more, disposed in operational sequence with each other, according to a determinate operational alignment with respect to a work axis.

According to a characteristic feature of the present invention, the supporting frame consists of a single mono-block, mono-beam or mono-body structure, with an elongated development, which supports the at least two work stations provided in operational sequence in the production line, and keeps them operationally aligned with each other along said work axis.

The supporting frame comprises two lateral stiffening elements both extending along the whole length defined by the sequence of work stations, and a plurality of transverse elements fixed on opposite sides to said two lateral elements in order to connect them.

With the present invention, we therefore have a single structure defining the support for all the work stations of the production line, thus giving the advantage of overall structural rigidity of the supporting frame, without providing assemblies between separate frames or modules, and without needing individual positioning and alignment of the distinct work stations.

This solution according to the invention thus allows to reduce to a minimum both the vibrations produced during the working steps, and also the installation times of the production line, substantially eliminating the risk that errors in alignment and positioning of the parts might be made.

Moreover, with the supporting frame comprising the single mono-block, mono-beam or mono-body structure according to the present invention, if there is a need to re-organize the operating spaces and the production line has to be displaced, it is sufficient to lift the entire production line from its single supporting frame and position it in the new operating site.

In this way, it is not necessary to provide, for this operation, any step of dismantling and assembling the frame and/or the work stations, reducing to a minimum the unproductiveness of the production line.

Another advantage of the present invention is that the single mono-block, mono-beam or mono-body structure allows to use the cabling operations on board the machine, accelerates the change of position of the work stations and improves the overall operativeness of the production line.

In a preferential embodiment of the present invention, the two lateral stiffening elements are substantially parallel with each other and each of them has a cross section shaped so as to define a respective internal housing compartment. The function of the compartment is to house inside it all the cables, tubes and/or mechanical parts which are necessary to connect the work stations in an operationally coordinated manner.

According to some variants, the internal compartment can be at least partly open, or closed, or defined by added parts assembled on the relative lateral element.

With the compartment, the cabling and laying of cables, tubes and/or the mechanical parts can be carried out in a common and standardized manner for all the work stations, and possibly before the common supporting frame is installed in the operating site, so as to further reduce the times and costs of installation of the entire production line.

Advantageously, inside each housing compartment an orderly retention means is provided, which allows to keep the cables, tubes and/or mechanical parts provided positioned according to a desired pattern: in this way it is possible to optimize the times necessary for intervention and maintenance steps.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view of a supporting frame according to the present invention, on which an extrusion line for plastic materials is assembled;
- fig. 2 is a three-dimensional view of the supporting frame in fig. 1 alone, without the extrusion line;
- fig. 3 is a cross section of the supporting frame in fig. 1.

### DETAILED DESCRIPTION OF A PREFERENTIAL FORM OF EMBODIMENT

With reference to the attached drawings, a supporting frame 10 according to the present invention is applied to support an entire production line 11, in this case suitable to extrude plastic material for making profiles or tubes, not shown in the drawings.

The production line 11 comprises a plurality of work stations disposed in operational sequence with each other, in this case defined by a gauge-bearing bench 12, a drawing member 13, a punch 15, a cutter 16 and a supporting bench 17 for the finished pieces. All the work stations 12-17 of the production line 11 are of a substantially known type, and therefore will not be described in detail here.

It cannot be excluded that the supporting frame 10 according to the present invention can be applied to support another type of production line 11.

In particular, the supporting frame 10 according to the present invention consists of a single mono-block, mono-beam or mono-body structure, with an elongated development, to support all the work stations 12-17.

The single supporting structure is conformed so as to keep all the work stations 12-17 in a determinate operational alignment with respect to a work axis X, and comprises a first lateral reinforcement element 19, a second lateral reinforcement element 20, and a plurality of transverse elements 21 connecting the two lateral elements 19 and 20.

The two lateral elements 19 and 20 are disposed and made substantially specular with each other, with respect to a hypothetical median longitudinal axis of the supporting frame 10 and extend along the whole length of the production line 11.

Both the first lateral element 19 and the second lateral element 20 are formed by a metal sheet having a shaped cross section, in this case substantially C-shaped, so as to define an internal housing compartment 22 in which the cables, the tubes and/or the mechanical components of connection and operative coordination between the work stations 12-17 are able to be housed.

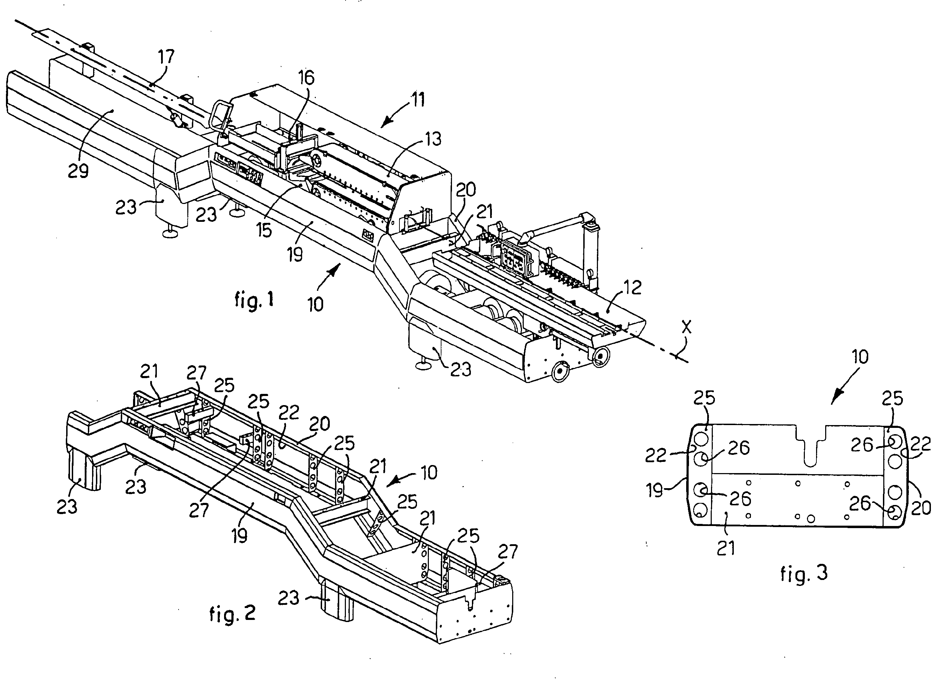

According to some variants, not shown, the cross section of each lateral element 19, 20 is shaped differently than shown in fig. 3, but always in such a manner as to define the internal compartment 22.

In this case, each lateral element 19, 20 also comprises two supporting legs 23, with which it is positioned on the ground.

Inside the internal compartments 22 of the two lateral elements 19, 20 a plurality of retaining plates 25 are disposed, made of metal sheet, shaped in a manner mating with the internal compartments 22 and provided with a plurality of holes 26, in which the cables, the tubes and/or the mechanical components of connection and operative coordination between the work stations 12-17 are respectively cabled.

The retaining plates 25 allow to keep the cables, the tubes and/or the mechanical parts according to a desired positioning pattern, thus facilitating both the installation and also possible maintenance work.

Inside the internal compartments 22 a plurality of supporting brackets 27 are also attached, able to allow the operationally aligned positioning of the distinct work stations 12-17 with respect to the work axis X, on the single mono-block, mono-beam or mono-body structure of the supporting frame 10.

The transverse elements 21 have their respective ends attached, for example by welding or by screwing, inside the internal compartments 22 of the two lateral elements 19, 20, in order to reciprocally connect the latter; each transverse element 21 substantially consists of a C-shaped or H-shaped metal profile able to stiffen the single mono-block, mono-beam or mono-body structure of the supporting frame 10 according to the present invention.

Some of the transverse elements 21, in this case one, instead of consisting of a metal profile are made of a metal sheet, the ends of which are shaped so as to define respective retaining plates 25.

It is clear, however, that modifications and/or additions of parts may be made to the supporting frame 10 as described heretofore, without departing from the field and scope of the present invention.

It also comes within the field of the present invention to provide that at least one of the two lateral elements 19, 20 comprises, integrated therewith, a general electric panel 29 to command the production line 11.

In this way, if the supporting frame 10 is lifted to displace the production line 11, the general electric panel 29 remains solid with the supporting frame 10 without needing electric disconnection of the work stations 12-17, thus advantageously shortening the time needed to re-start the production line 11.

It is also clear that, although the present invention has been described with reference to specific examples, a person of skill in the art shall certainly be able to achieve many other equivalent forms of supporting frame for a production line, having the characteristics as set forth in the claims and hence all coming within the field of protection defined thereby.

## Claims

1. Production line consisting of at least two distinct work stations (12, 13, 15, 16, 17), advantageously three or more, disposed in operational sequence with each other in a determinate operational alignment with respect to a work axis (X), **characterized in that** it comprises a supporting frame consisting of a single mono-block, mono-beam or mono-body structure, having an elongated development of a size mating with the overall size of said at least two work stations (12, 13, 15, 16, 17), and able to support and maintain said work stations (12, 13, 15, 16, 17) operationally aligned with each other along said work axis (X), said mono-block, mono-beam or mono-body structure comprising at least two lateral stiffening elements (19, 20) extending over the whole length of the frame, and a plurality of transverse elements (21) fixed on opposite sides to said two lateral elements (19, 20), so as to connect said two lateral elements (19, 20) with each other.

2. Production line as in claim 1, **characterized in that** said two lateral elements (19, 20) are disposed substantially parallel with each other and each of them has a cross section shaped so as to define a respective internal housing compartment (22) for cables, tubes and/or mechanical parts of connection and operative coordination between said work stations (12, 13, 15, 16, 17).

3. Production line as in claim 2, **characterized in that** said shaped cross section of each of said lateral elements (19, 20) is substantially C-shaped.

4. Production line as in claim 2 or 3, **characterized in that** inside each housing compartment (22) a retaining means (25) is provided, able to keep the cables, tubes and/or mechanical parts provided positioned according to a desired pattern.

5. Production line as in any claim hereinbefore, **characterized in that** each of said transverse elements (21) substantially consists of a metal profile the ends of which are fixed to a respective one of said lateral elements (19, 20).

6. Production line as in any claim hereinbefore, **characterized in that** each of said transverse elements (21) substantially consists of a metal sheet the ends of which are fixed to a respective one of said lateral elements (19, 20), and wherein said ends are shaped in such a manner as to define respective retaining means (25) able to keep the cables, tubes and/or mechanical parts provided positioned according to a desired pattern.

7. Production line as in any claim hereinbefore, **characterized in that** at least one of said two lateral elements (19, 20) comprises, integrated therewith, a general electric panel (29) to command said production line (11).

## Patentansprüche

1. Fertigungsanlage aus mindestens zwei, vorzugsweise drei oder mehr, getrennten Arbeitsstationen (12, 13, 15, 16, 17), die in einer Arbeitsabfolge miteinander in einer bestimmten Arbeitsausrichtung bezüglich einer Arbeitsachse (X) angeordnet sind, **dadurch gekennzeichnet, dass** sie einen aus einem einzelnen einstückigen Aufbau bestehenden Tragrahmen aufweist, dessen Längserstreckung eine der Gesamtabmessung der mindestens zwei Arbeitsstationen (12, 13, 15, 16, 17) entsprechende Abmessung hat und der in der Lage ist, die Arbeitsstationen (12, 13, 15, 16, 17) in ihrer gegenseitigen Arbeitsausrichtung bezüglich der Arbeitsachse (X) zu tragen und zu halten, wobei der einstückige Aufbau mindestens zwei über die gesamte Länge des Rahmens verlaufende seitliche Versteifungselemente (19, 20) sowie mehrere Querelemente (21) aufweist, die mit entgegengesetzten Enden an den beiden seitlichen Elementen (19, 20) befestigt sind und diese miteinander verbinden.

2. Fertigungsanlage nach Anspruch 1, **dadurch gekennzeichnet, dass** die beiden seitlichen Elemente (19, 20) im Wesentlichen parallel zueinander verlaufen und beide jeweils einen Querschnitt aufweisen, der so geformt ist, dass er jeweils eine innere Gehäusekammer (22) für Kabel, Schläuche und/oder mechanische Teile zur Verbindung und Arbeitskoordination zwischen den Arbeitsstationen (12, 13, 15, 16, 17) bildet.

3. Fertigungsanlage nach Anspruch 2, **dadurch gekennzeichnet, dass** der geformte Querschnitt jedes der seitlichen Elemente (19, 20) im Wesentlichen C-förmig ist.

4. Fertigungsanlage nach Anspruch 2 oder 3, **dadurch gekennzeichnet, dass** in jeder Gehäusekammer (22) eine Halteeinrichtung (25 vorgesehen ist, die in der Lage ist, die vorhandenen Kabel, Schläuche und/oder mechanischen Teile in einem gewünschten Muster angeordnet zu halten.

5. Fertigungsanlage nach einem der vorhergehenden Ansprüche, **dadurch gekennzeichnet, dass** jedes der Querelemente (21) im Wesentlichen aus einem Metallprofil besteht, dessen Enden an jeweils einem der seitlichen Elemente (19, 20) befestigt sind.

6. Fertigungsanlage nach einem der vorhergehenden Ansprüche, **dadurch gekennzeichnet, dass** jedes der Querelemente (21) im Wesentlichen aus einem Metallblech besteht, dessen Enden an jeweils einem der seitlichen Elemente (19, 20) befestigt sind, wobei die Enden so gestaltet sind, dass sie jeweils Halteeinrichtungen (25) bilden, die in der Lage sind, die vorhandenen Kabel, Schläuche und/oder mechanischen Teile in einem gewünschten Muster angeordnet zu halten.

7. Fertigungsanlage nach einem der vorhergehenden Ansprüche, **dadurch gekennzeichnet, dass** mindestens eines der seitlichen Elemente (19, 20) eine integrierte allgemeine elektrische Schalttafel (29) zur Steuerung der Fertigungsanlage (11) enthält.

## Revendications

1. Ligne de production consistant en au moins deux postes de travail distincts (12, 13, 15, 16, 17), avantageusement trois ou plus, disposés en séquence opérationnelle les uns avec les autres, dans un alignement opérationnel déterminé relativement à un axe de travail (X), **caractérisée en ce qu'**elle comprend un cadre de support constitué d'une seule structure monobloc, mono-faisceau ou mono-corps, ayant un développement allongé d'une taille s'adaptant à la taille globale desdits au moins deux postes de travail (12, 13, 15, 16, 17) et capable de supporter et de maintenir lesdits postes de travail (12, 13, 15, 16, 17) opérationnellement alignés les uns avec les autres le long dudit axe de travail (X), ladite structure monobloc, mono-faisceau ou mono-corps comprenant au moins deux éléments de renfort latéraux (19, 20) s'étendant sur toute la longueur du cadre, et une pluralité d'éléments transversaux (21) fixés sur des côtés opposés auxdits deux éléments latéraux (19, 20), de façon à connecter lesdits deux éléments latéraux (19, 20) l'un avec l'autre.

2. Ligne de production selon la revendication 1, **caractérisée en ce que** lesdits deux éléments latéraux (19, 20) sont disposés sensiblement parallèlement l'un à l'autre et chacun d'eux a une section transversale façonnée, de façon à définir un compartiment de logement interne respectif (22) pour les câbles, tubes et/ou pièces mécaniques de connexion et de coordination opérationnelle entre lesdits postes de travail (12, 13, 15, 16, 17).

3. Ligne de production selon la revendication 2, **caractérisée en ce que** ladite coupe transversale de chacun desdits éléments latéraux (19, 20) est sensiblement en forme de C.

4. Ligne de production selon la revendication 2 ou 3, **caractérisée en ce qu'**à l'intérieur de chaque compartiment de logement (22), un système de retenue (25) est fourni, et capable de maintenir les câbles, tubes et/ou pièces mécaniques fournis positionnés selon un modèle souhaité.

5. Ligne de production selon l'une quelconque des revendications ci-dessus, **caractérisée en ce que** chacun desdits éléments transversaux (21) consiste sensiblement en un profil métallique dont les extrémités sont fixées à l'un des éléments latéraux respectifs (19, 20).

6. Ligne de production selon l'une quelconque des revendications précédentes, **caractérisée en ce que** chacun desdits éléments transversaux (21) consiste sensiblement en une feuille métallique, dont les extrémités sont fixées à un élément respectif desdits éléments latéraux (19, 20) et dans laquelle lesdites extrémités sont façonnées, de façon à définir des moyens de retenue respectifs (25) capables de maintenir les câbles, tubes et/ou pièces mécaniques fournis positionnés selon un modèle souhaité.

7. Ligne de production selon l'une quelconque des revendications précédentes, **caractérisée en ce qu'**au moins un desdits deux éléments latéraux (19, 20) comprend, intégré à l'intérieur, un panneau électrique général (29) pour commander ladite ligne de production (11).
